(19) Europäisches Patentamt
European Patent Office
Office européen des brevets

(11) **EP 4 075 758 B1**

(12) **FASCICULE DE BREVET EUROPEEN**

(45) Date de publication et mention de la délivrance du brevet:
**13.08.2025 Bulletin 2025/33**

(21) Numéro de dépôt: **22165028.6**

(22) Date de dépôt: **29.03.2022**

(51) Classification Internationale des Brevets (IPC):
***H04L 47/125*** (2022.01)

(52) Classification Coopérative des Brevets (CPC):
**H04L 47/125**

(54) **PROCÉDÉ POUR OPTIMISER LE TRAFIC ENTRE SYSTÈMES AUTONOMES**

VERFAHREN ZUR OPTIMIERUNG DES VERKEHRS ZWISCHEN AUTONOMEN SYSTEMEN

METHOD FOR OPTIMISING THE TRAFFIC BETWEEN INDEPENDENT SYSTEMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2021 FR 2103458**

(43) Date de publication de la demande:
**19.10.2022 Bulletin 2022/42**

(73) Titulaire: **Orange**
**92130 Issy-les-Moulineaux (FR)**

(72) Inventeurs:
 • **LAMBERT, M. Anthony**
 **92326 CHATILLON (FR)**
 • **AGUAS, Elkin**
 **92326 CHATILLON (FR)**

(74) Mandataire: **Plasseraud IP**
 **104 Rue de Richelieu**
 **CS92104**
 **75080 Paris Cedex 02 (FR)**

(56) Documents cités:
**US-A1- 2021 099 378**

 • **JOSE M. CAMACHO ET AL: "BGP-XM: BGP eXtended Multipath for transit Autonomous Systems", COMPUTER NETWORKS, vol. 57, no. 4, 31 March 2013 (2013-03-31), pages 954 - 975, XP055090503, ISSN: 1389-1286, DOI: 10.1016/ j.comnet.2012.11.011**

**Description**

**Domaine technique**

La présente divulgation relève du domaine du trafic entre systèmes autonomes.
Plus particulièrement, la présente divulgation porte sur un procédé de répartition de trafic sur un ensemble de liens interconnectant une pluralité de systèmes autonomes.

**Technique antérieure**

L'Internet est composé de systèmes autonomes, ensembles de réseaux et routeurs sous une même autorité administrative.
Pour maintenir l'accessibilité et la connectivité globale de l'Internet, les systèmes autonomes doivent s'interconnecter et échanger de l'information relative à des réseaux dont différents opérateurs sont responsables, permettant aux systèmes autonomes de s'envoyer du trafic en forme de paquets de données.
L'interconnexion entre différents systèmes autonomes n'est pas le fruit du hasard et repose souvent sur des accords bilatéraux entre opérateurs. En cas de pluralité de chemins possibles vers une même destination, la sélection du chemin que le trafic va prendre résulte de l'examen séquentiel des préférences des systèmes autonomes par lesquels le trafic passe, ainsi que des préférences des systèmes autonomes voisins. Les chemins sont construits comme une somme de décisions locales, et chaque système autonome va choisir localement et indépendamment des autres systèmes autonomes un meilleur chemin vers une destination donnée.
L'enjeu pour un système autonome est d'annoncer les préfixes des réseaux dont il est responsable dans l'Internet d'une manière qui a le potentiel d'influencer en sa faveur les meilleurs chemins construits par d'autres systèmes autonomes.
Il peut donc être difficile d'anticiper le chemin que le trafic va prendre, et d'assurer une bonne répartition de charge sur les liens qui transportent le trafic d'un système autonome à l'autre.
La conséquence en est que certains liens peuvent être surchargés et saturer, menant à une perte du contenu transmis, alors que d'autres liens peuvent être peu chargés, voire pas chargés du tout. De plus, la répartition du trafic sur les liens peut ne pas satisfaire aux accords éventuels.
Un système autonome qui constate une telle sous-optimalité sur la répartition du trafic peut implémenter différentes actions d'optimisation, notamment des actions modifiant des attributs BGP (pour « Border Gateway Protocol ») auxquels il a accès, ou des actions modifiant l'annonce des préfixes des réseaux dont il est responsable.
Une implémentation manuelle de telles actions d'optimisation est complexe et peut provoquer des erreurs. Elle prévoit de procéder par étapes, chaque étape comprenant l'application d'une action d'optimisation et l'observation subséquente de l'effet de l'action sur l'état de charge des liens.
Une automatisation peut aider dans cette implémentation d'actions. Cependant, une automatisation est basée sur des règles prédéfinies pour choisir les actions à exécuter, ce qui peut entraîner l'exécution d'actions non adaptées ou inutiles, et même provoquer des oscillations de l'état de charge des liens entre deux ou plusieurs états sous-optimaux.
Des exemples et des modes de réalisation de l'art antérieur peuvent être trouvés dans US 2021/0099378 A1.

**Résumé**

La présente divulgation vient améliorer la situation.
Il est proposé un procédé de répartition de trafic sur un ensemble de liens interconnectant un système autonome local avec une pluralité de systèmes autonomes voisins du système autonome local, le procédé comprenant :

> /a/ recevoir une information au moins relative à des caractéristiques de la pluralité de systèmes autonomes voisins ;
> /b/ déterminer, à partir de l'information reçue, un résultat d'une fonction de récompense, représentatif d'un état dudit ensemble de liens ;
> /c/ déclencher, en fonction de l'information reçue et du résultat de la fonction de récompense, au moins une action influant sur une répartition du trafic sur l'ensemble de liens de sorte à optimiser l'état de charge de l'ensemble de liens ;
> /d/ réitérer les étapes /a/ à /c/ ;

l'au moins une action étant identifiée par une intelligence artificielle configurée pour apprendre à identifier, sur la base de résultats successifs de la fonction de récompense, des actions permettant de répartir le trafic sur l'ensemble de liens de sorte à optimiser l'état de charge de l'ensemble de liens.
Un système autonome peut être un ensemble de réseaux et routeurs sous une même autorité administrative. Différents systèmes autonomes peuvent être interconnectés par des liens pour transporter du trafic, et des routeurs BGP (pour « Border Gateway Protocol ») mettant en œuvre un protocole BGP, ayant comme objectif d'échanger des informations de routage et d'accessibilité de réseaux informatiques dont les systèmes autonomes sont responsables.

Dans un mode de réalisation, l'information reçue lors de l'étape /a/ est représentative : d'un état de charge de l'ensemble de liens ; d'un type de système autonome pour chacun des systèmes autonomes voisins ; de préfixes relatifs à des réseaux hébergés par le système autonome local et par les systèmes autonomes voisins, les préfixes étant annoncés par un système autonome à ses voisins. Un préfixe peut être un identifiant permettant d'identifier chaque réseau au sein d'un système autonome.

Un système autonome local peut être un système autonome connecté à un ou plusieurs autres systèmes autonomes, et qui met en œuvre le procédé.

Un système autonome voisin peut être un système autonome auquel un système autonome local est connecté directement, c'est-à-dire sans devoir passer par un autre système autonome.

Le trafic transmis entre systèmes autonomes peut correspondre à tout type de données transmises d'un système autonome à un autre.

Le procédé, mis en œuvre par un dispositif du système autonome local, ou qui lui est associé, vise à influencer la répartition du trafic à destination du système autonome local, c'est-à-dire du trafic entrant dans le système autonome local.

Un état de charge d'un lien peut correspondre au type et/ou au volume de trafic transporté sur le lien.

Un type de système autonome peut caractériser un niveau hiérarchique d'un système autonome par rapport à un autre système autonome. Un tel type de système autonome peut être par exemple un système autonome client, un système autonome pair (ou « peer ») ou un système autonome fournisseur.

Un système autonome client peut être un système autonome qui obtient des données et/ou qui utilise des services fournis par un autre système autonome. Un système autonome client est souvent un particulier ou une petite entreprise.

Un système autonome fournisseur peut être un système autonome qui met en place une infrastructure pour proposer des services à d'autres systèmes autonomes et/ou pour fournir des données à d'autres systèmes autonomes. Un système autonome fournisseur peut permettre à un système autonome client d'accéder aux réseaux dont il est responsable. Un système autonome fournisseur peut être par exemple un fournisseur d'accès à Internet, une entreprise technologique, une université ou une agence gouvernementale.

Des systèmes autonomes pairs (ou « peer ») peuvent être des systèmes autonomes de même niveau hiérarchique qui concluent des accords relatifs à une mise en place ou une utilisation commune de structures telles que des réseaux ou des liens pour acheminer le trafic. Dans une interconnexion de type pair, deux systèmes autonomes peuvent s'autoriser mutuellement à accéder à un sous-ensemble des réseaux dont ils sont responsables. Des systèmes autonomes pair peuvent être par exemple des fournisseurs d'accès à Internet.

Une fonction de récompense est un concept en intelligence artificielle. Le résultat de la fonction de récompense permet de quantifier la répartition de charge sur l'ensemble de liens, et d'indiquer si un état de charge est satisfaisant ou pas.

Outre le résultat de la fonction de récompense, d'autres éléments de l'information reçue peuvent être pris en compte pour déterminer si un état de charge est satisfaisant ou pas, par exemple des informations qui indiquent une congestion de trafic sur un lien donné.

Le procédé proposé vise à répondre aux inconvénients cités précédemment et à proposer une mise en œuvre d'une optimisation du trafic entre un système autonome local et les systèmes autonomes voisins du système autonome local, permettant une meilleure utilisation des liens et une meilleure qualité de transmission du trafic.

Le procédé proposé est innovant sur la détermination d'un résultat d'une fonction de récompense, et sur l'au moins une action déclenchée, en fonction de l'information reçue et du résultat de la fonction de récompense, qui permet de répartir le trafic sur l'ensemble de liens, de sorte à optimiser l'état de charge de l'ensemble de liens.

Le procédé proposé est, de plus, original en ce que l'au moins une action est identifiée par une intelligence artificielle configurée pour apprendre à identifier l'au moins une action qui permet de répartir le trafic sur l'ensemble de liens de sorte à optimiser l'état de charge de l'ensemble de liens.

Dans la mise en œuvre du procédé, aucune connaissance préalable sur l'état du système n'est requise. L'intelligence artificielle peut s'adapter à des nouvelles situations et trouver des solutions à des problèmes complexes. L'intelligence artificielle découvre, au fur et à mesure, sur la base du résultat de la fonction de récompense, l'au moins une action qui mène à une optimisation du trafic et de l'état de charge de l'ensemble de liens. L'apprentissage permet à l'intelligence artificielle de s'entraîner, après une ou plusieurs itérations du procédé, et d'apprendre quels effets a l'au moins une action déclenchée par elle sur l'état de charge de l'ensemble de liens, ce qui lui permet de choisir l'au moins une action de telle manière à optimiser l'état de charge de l'ensemble de liens représenté par le résultat de la fonction de récompense.

Une répartition du trafic a pour effet un meilleur équilibrage des charges sur l'ensemble des liens interconnectant le système autonome local avec ses voisins, améliorant la gestion et l'utilisation des liens, ainsi que la qualité de transmission du trafic.

Les caractéristiques exposées dans les paragraphes suivants peuvent, optionnellement, être mises en œuvre. Elles peuvent être mises en œuvre indépendamment les unes des autres ou en combinaison les unes avec les autres.

Dans un mode de réalisation, l'intelligence artificielle comprend un réseau de neurones.

Un réseau de neurones est spécialement adapté pour la mise en œuvre d'un apprentissage par l'expérience, dit « apprentissage automatique ».

L'apprentissage permet d'optimiser les résultats obtenus relatifs à l'état de charge des liens en fonction d'actions déclenchées et de résultats obtenus antérieurement.

Dans un mode de réalisation, l'optimisation de l'état de charge selon l'étape /c/ comprend la convergence de l'état de charge vers un état de charge souhaité.

L'état de charge souhaité peut être un état prédéfini ou un état considéré comme avantageux par l'intelligence artificielle, par exemple parce qu'il correspond à un résultat optimal de la fonction de récompense.

Souvent il n'est pas possible d'atteindre un état de charge souhaité en déclenchant une seule fois une ou plusieurs actions. La réitération du procédé permet à l'intelligence artificielle, dans chaque itération, d'apprendre à partir d'actions antérieures, et ainsi de déclencher une ou plusieurs actions optimisées et de converger, au fur et à mesure, vers l'état souhaité. Ainsi, l'intelligence artificielle peut apprendre, dans un processus itératif, la relation entre les actions déclenchées et les effets des actions sur l'état de charge, pour un état de charge donné.

Dans un mode de réalisation, le type de système autonome peut être un système autonome client, un système autonome pair ou un système autonome fournisseur.

Cette information relative au type de système autonome pour chacun des systèmes autonomes voisins respectifs peut influencer le résultat de la fonction de récompense, et ainsi l'au moins une action déclenchée.

Par exemple, un système autonome fournisseur ayant plusieurs chemins possibles pour envoyer du trafic peut avoir intérêt de passer par des systèmes autonomes client, au lieu de passer par d'autres systèmes autonomes fournisseurs.

Dans un mode de réalisation, l'au moins une action déclenchée selon l'étape /c/ comprend la modification d'au moins un attribut BGP.

Les routeurs BGP peuvent sélectionner le meilleur chemin pour acheminer le trafic sur la base des préférences et propriétés des systèmes autonomes, liens et routeurs BGP.

La modification d'un attribut BGP représente un moyen pour influer sur l'acheminement du trafic. Une modification d'un ou plusieurs attributs BGP permet à un système autonome local d'influencer la manière dont sont annoncés les préfixes des réseaux et le chemin que va prendre le trafic, menant à une répartition (potentiellement optimisée) du trafic sur les liens.

Dans un mode de réalisation, la modification de l'au moins un attribut BGP comprend au moins la modification d'un attribut BGP parmi : MED, AS PATH, PREFIX.

L'attribut PREFIX représente les préfixes annoncés par le système autonome local. Le PREFIX peut être modifié par une action nommée LOAD SHARING. La modification du PREFIX par LOAD SHARING permet de n'annoncer qu'une partie des préfixes et/ou de n'annoncer les préfixes qu'à un sous-ensemble de systèmes autonomes voisins. La conséquence peut être que certains liens seront privilégiés par le trafic et utilisés en priorité pour acheminer le trafic. Par exemple, si certains préfixes ne sont annoncés qu'à une partie des systèmes autonomes voisins, il est probable que le trafic à destination de ces préfixes sera réduit et que les liens correspondants seront moins chargés.

L'attribut AS PATH représente la séquence des systèmes autonomes par lesquels l'information de routage a transité. De manière générale, le trafic va préférer le chemin dont l'attribut AS PATH compte le moins de systèmes autonomes. La modification de l'AS PATH par une action nommée PREPENDING, permet à un système autonome local d'augmenter la taille de l'attribut AS PATH artificiellement, notamment en ajoutant plusieurs fois son propre numéro. Le trafic va préférer un chemin ayant un AS PATH court par rapport à un chemin avec un AS PATH long.

Par exemple, un système autonome local peut augmenter artificiellement la taille d'un attribut AS PATH de type « 1 2 3 », représentatif d'un certain chemin que le trafic peut prendre, en ajoutant plusieurs fois son propre numéro (ex. « 1 2 2 2 3 »). S'il existe un chemin alternatif qui passe par un autre système autonome (ex. « 1 4 3 ») et qui, comme la taille de son attribut AS PATH n'a pas été augmentée artificiellement, a l'air d'être plus court, ce chemin sera préféré par rapport au chemin avec l'attribut AS PATH dont la taille a été augmentée (« 1 2 2 2 3 »).

L'attribut MED (pour « Multi Exit Discriminator ») peut être échangé entre systèmes autonomes voisins et indiquer le point d'entrée préféré du système autonome local pour le trafic en provenance de systèmes autonomes voisins et à destination du système autonome local.

La modification du MED permet d'influencer le point d'entrée du trafic en provenance de systèmes autonomes voisins dans un système autonome local. De manière générale, le trafic va préférer le chemin avec une valeur MED basse par rapport à un chemin avec une valeur MED élevée.

Un contrôle d'un ou plusieurs de ces trois attributs permet d'influer sur la répartition du trafic sur les liens de sorte à optimiser l'état de charge.

Dans un mode de réalisation, la modification de l'au moins un attribut BGP prend en compte un délai de propagation de préfixes à annoncer.

De manière générale, une modification d'un attribut BGP ne provoque pas une modification instantanée d'une répartition du trafic. Un certain temps peut être nécessaire pour l'information correspondante pour propager et déployer ses effets.

La prise en compte d'un délai de propagation des préfixes permet à l'intelligence artificielle la détermination de l'au moins une action déclenchée.

Dans un mode de réalisation, le procédé comprend une étape de déclenchement d'au moins une action influant sur une répartition du trafic de manière aléatoire sur au moins une partie de l'ensemble de liens.

Si le résultat de la fonction de récompense atteint une valeur considérée comme optimale, l'intelligence artificielle peut considérer avoir atteint un état optimal, bien qu'il puisse s'agir d'un extremum local de la fonction de récompense. L'état de charge peut être piégé dans une boucle et osciller entre deux ou plusieurs états sous-optimaux. De tels effets de bord peuvent être difficiles à appréhender.

Le déclenchement d'au moins une action influant sur une répartition du trafic de manière aléatoire, bien que cette répartition ne soit pas a priori considérée comme utile, peut aider à sortir l'état de charge d'un tel état sous-optimal.

Un autre aspect de la divulgation comprend un dispositif de décision pour répartir un trafic sur un ensemble de liens interconnectant un système autonome local avec une pluralité de systèmes autonomes voisins du système autonome local, le dispositif comprenant :

- au moins une interface configurée pour :

    /a/ recevoir une information au moins relative à des caractéristiques de la pluralité de systèmes autonomes voisins (AS100, AS200, AS300) ;

- au moins un circuit de traitement configuré pour :

    /b/ déterminer, à partir de l'information reçue, un résultat d'une fonction de récompense, représentatif d'un état dudit ensemble de liens ;
    /c/ déclencher, en fonction de l'information reçue et du résultat de la fonction de récompense, au moins une action influant sur une répartition du trafic sur l'ensemble de liens de sorte à optimiser l'état de charge de l'ensemble de liens ;
    /d/ réitérer les étapes /a/ à /c/ ;

le dispositif comprenant une intelligence artificielle configurée pour apprendre à identifier, sur la base de résultats successifs de la fonction de récompense, l'au moins une action qui permet de répartir le trafic sur l'ensemble de liens de sorte à optimiser l'état de charge de l'ensemble liens.

Le dispositif de décision peut être intégré dans le système autonome local ou lui être associé, et être adapté pour mettre en œuvre le procédé précédemment décrit dans tous ses modes de réalisation.

Le dispositif proposé est innovant sur l'au moins une action influant sur une répartition du trafic qu'il peut déclencher, et sur la détermination d'un résultat d'une fonction de récompense.

Le dispositif proposé est, de plus, original en ce qu'il comprend une intelligence artificielle configurée pour apprendre à identifier l'au moins une action qui permet de répartir le trafic sur l'ensemble de liens de sorte à optimiser l'état de charge de l'ensemble liens.

Un autre aspect de la présente invention comprend un produit programme informatique comportant des instructions pour la mise en œuvre du procédé de la présente invention, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

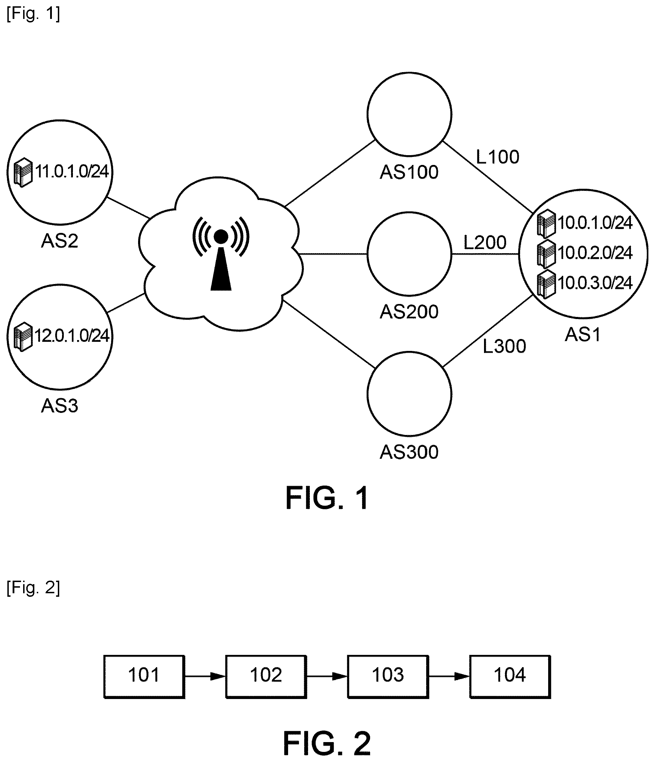

La figure 2 décrite en détail ci-après peut former l'organigramme de l'algorithme général d'un tel programme informatique.

## Brève description des dessins

D'autres caractéristiques, détails et avantages apparaîtront à la lecture de la description détaillée ci-après, et à l'analyse des dessins annexés, sur lesquels :

**Fig. 1**
[Fig. 1] montre un système autonome local connecté à une pluralité de systèmes autonomes voisins du système autonome local dans l'Internet.

**Fig. 2**

[Fig. 2] montre un ordinogramme d'un procédé de répartition de trafic sur un ensemble de liens interconnectant un système autonome local avec une pluralité de systèmes autonomes voisins du système autonome local.

**Fig. 3**

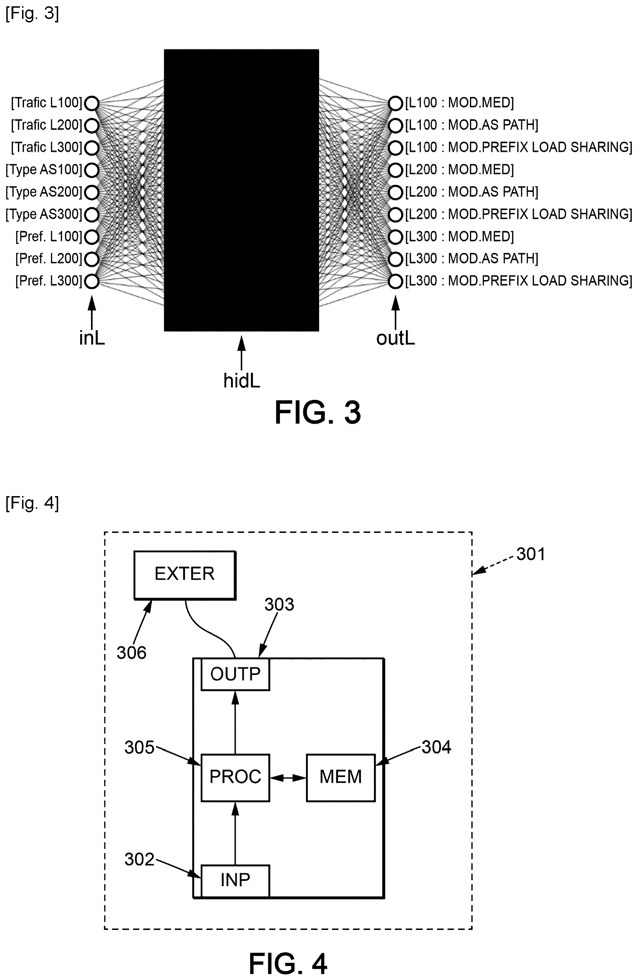

[Fig. 3] montre un réseau de neurones, configuré pour identifier des actions à déclencher dans la mise en œuvre du procédé de répartition de trafic sur un ensemble de liens.

**Fig. 4**

[Fig. 4] présente un dispositif adapté à mettre en œuvre le procédé.

**Description des modes de réalisation**

La figure 1 montre un système autonome local connecté à une pluralité de systèmes autonomes voisins du système autonome local dans l'Internet. Le système autonome local peut être configuré pour mettre en œuvre le procédé selon la présente invention, par le biais d'un dispositif de décision.

L'Internet est composé de systèmes autonomes, ensembles de réseaux et routeurs sous une même autorité administrative. Différents systèmes autonomes peuvent être interconnectés par des liens pour transporter du trafic en forme de paquets de données, et des routeurs BGP (pour « Border Gateway Protocol ») mettant en œuvre un protocole BGP, ayant comme objectif d'échanger des informations de routage et d'accessibilité de réseaux informatiques dont les systèmes autonomes sont responsables.

Pour permettre l'envoi de trafic d'un système autonome à l'autre, chaque système autonome peut annoncer des préfixes relatifs aux réseaux qu'il héberge aux systèmes autonomes voisins.

Le cas non-limitatif de la figure 1 montre un système autonome local AS1 connecté à trois systèmes autonomes voisins AS100, AS200, AS300.

AS100 peut être un système autonome client, AS200 un système autonome pair et A300 un système autonome fournisseur.

Un système autonome client peut être un système autonome qui obtient des données et/ou qui utilise des services fournis par un autre système autonome. Un système autonome client est souvent un particulier ou une petite entreprise.

Un système autonome fournisseur peut être un système autonome qui met en place une infrastructure pour proposer des services à d'autres systèmes autonomes et/ou pour fournir des données à d'autres systèmes autonomes. Un système autonome fournisseur peut permettre à un système autonome client d'accéder aux réseaux dont il est responsable. Un système autonome fournisseur peut être par exemple un fournisseur d'accès à Internet, une entreprise technologique, une université ou une agence gouvernementale.

Des systèmes autonomes pairs (ou « peer ») peuvent être des systèmes autonomes de même niveau hiérarchique qui concluent des accords relatifs à une mise en place ou une utilisation commune de structures telles que des réseaux ou des liens pour acheminer le trafic. Dans une interconnexion de type pair, deux systèmes autonomes peuvent s'autoriser mutuellement à accéder à un sous-ensemble des réseaux dont ils sont responsables. Des systèmes autonomes pair peuvent être par exemple des fournisseurs d'accès à Internet.

AS1 peut héberger trois réseaux et annoncer les préfixes 10.0.1.0/24, 10.0.2.0/24, 10.0.3.0/24 relatifs à ces réseaux aux systèmes autonomes voisins. Chacun de ces trois préfixes peut être annoncé sur chacun des trois liens connectant AS1 à AS100 (lien L100), AS1 à AS200 (lien L200), et AS1 à AS300 (lien L300).

Il y a en outre deux systèmes autonomes AS2 et AS3 connectés aux systèmes AS100, AS200 et AS300 via Internet.

AS2 et AS3 peuvent annoncer un préfixe chacun. L'information relative aux préfixes annoncés peut être transmise à AS1 par l'intermédiaire d'un ou plusieurs de ses voisins directs AS100, AS200, AS300.

Les systèmes autonomes voisins AS100, AS200 et AS300 n'annoncent pas de préfixes.

Pour influencer l'acheminement du trafic sur les liens L100, L200, L300 en sa faveur, le système autonome local AS1 peut mettre en œuvre un procédé pour répartir le trafic entrant en provenance des systèmes autonomes voisins A100, A200, A300 sur les liens L100, L200, L300.

La figure 2 montre l'ordinogramme d'un procédé de répartition de trafic sur un ensemble de liens interconnectant un système autonome local avec une pluralité de systèmes autonomes voisins du système autonome local. Le procédé peut être mis en œuvre par le système autonome local. Le dispositif de décision peut comprendre une intelligence artificielle.

Dans une première étape 101 du procédé, le dispositif de décision peut recevoir une ou plusieurs informations représentatives :

- d'un état de charge de liens ;
- d'un type de système autonome pour chacun des systèmes autonomes voisins ; et
- de préfixes relatifs à des réseaux hébergés par le système autonome local et les systèmes autonomes, les préfixes étant annoncés par un système autonome à ses voisins.

L'état de charge peut indiquer si un ou plusieurs liens sont surchargés, raisonnablement chargés ou peu chargés, ainsi que le volume du trafic (typiquement indiqué en Gbps).

Un type d'un système autonome peut décrire un niveau hiérarchique d'un système autonome par rapport à d'autres systèmes autonomes. Il peut s'agir notamment d'un système autonome client, d'un système autonome pair (ou « peer ») ou d'un système autonome fournisseur.

L'information représentative de préfixes relatifs à des réseaux hébergés peut comprendre des détails concernant les propriétés de ces réseaux, telle que le nombre de serveurs disponibles et les caractéristiques des serveurs, ex. le stockage ou la mémoire vive.

En particulier, l'information que le système autonome local reçoit par d'autres systèmes autonomes peut comprendre :

- l'attribut LOCAL PREF. Cet attribut peut être configuré sur les routeurs BGP, et renseigner les routeurs sur l'intérêt de passer par un certain chemin. Par exemple, un système autonome fournisseur ayant plusieurs chemins possibles pour envoyer du trafic peut avoir intérêt de passer par des systèmes autonomes client, au lieu de passer par d'autres systèmes autonomes fournisseurs. De manière générale, le trafic va préférer le chemin ayant le LOCAL PREF le plus élevé.
- l'attribut AS PATH : Cet attribut peut être transporté par le trafic et représenter la séquence des systèmes autonomes par lesquels le trafic a transité. De manière générale, le trafic va préférer le chemin dont l'attribut AS PATH compte le moins de systèmes autonomes, permettant d'éviter des boucles de routage ;
- toute autre information, notamment relative à des accords conclus entre systèmes autonomes. Il peut exister des accords entre systèmes autonomes stipulant les échanges entre les systèmes autonomes (décrit par le « ratio de peering »). Ces accords tiennent compte du fait qu'une connexion entre systèmes autonomes n'est souvent pas symétrique dans l'Internet, et que le trafic en provenance d'un premier système autonome et à destination d'un second système autonome ne va pas nécessairement prendre le même chemin que le trafic en provenance du second système autonome et à destination du premier système autonome.

De manière générale, le trafic va prendre le plus court chemin entre deux systèmes autonomes et au sein d'un système autonome, ce qui peut correspondre au chemin qui optimise la valeur des attributs LOCAL PREF, AS PATH et MED, tout en tenant compte de contraintes telles que des accords conclus entre systèmes autonomes.

Dans une deuxième étape 102, le dispositif de décision peut déterminer, à partir de l'information reçue, un résultat d'une fonction de récompense, représentatif d'un état de l'ensemble de liens.

La fonction de récompense est un concept en intelligence artificielle qui permet de quantifier l'équilibrage de charge sur les liens. Par exemple, une valeur élevée du résultat de la fonction de récompense peut indiquer si un état de charge est souhaitable. A cet effet, le résultat de la fonction de récompense peut être comparé à une valeur de référence.

Dans une troisième étape 103, le dispositif de décision peut déclencher, en fonction du résultat de la fonction de récompense et de l'information reçue, des actions influant sur la répartition du trafic sur l'ensemble de liens de sorte à optimiser l'état de charge de l'ensemble de liens.

Les actions peuvent être identifiées par l'intelligence artificielle.

Pour un système autonome local, le procédé vise à influencer la répartition du trafic en provenance d'un ou de plusieurs systèmes autonomes voisins (qui poursuivent souvent des stratégies complexes pour acheminer le trafic) et à destination dudit système autonome local, c'est-à-dire du trafic entrant dans ledit système autonome local.

Par exemple, si la valeur du résultat de la fonction de récompense est élevée et supérieure à une valeur de référence, l'intelligence artificielle peut conclure que l'état de charge est optimal et décider qu'il n'est pas nécessaire de déclencher d'actions d'optimisation.

Les actions selon la troisième étape 103 peuvent comprendre la modification d'au moins un attribut BGP auquel le système local a accès, tel que : MED, AS PATH, PREFIX. La modification d'un attribut BGP représente un moyen pour influer sur l'acheminement du trafic.

L'attribut PREFIX représente les préfixes annoncés par un système autonome local. Le PREFIX peut être modifié par une action nommée LOAD SHARING : La modification du PREFIX par LOAD SHARING consiste à n'annoncer qu'une partie des préfixes et/ou à n'annoncer les préfixes qu'à un sous-ensemble de systèmes autonomes voisins (potentiellement un seul). La conséquence peut être que certains liens sont privilégiés par le trafic et sélectionnés en priorité par les systèmes autonomes voisins. Potentiellement, la modification du PREFIX par LOAD SHARING et donc la modification de la manière d'annoncer des préfixes peut être l'action avec l'impact le plus fort sur la répartition du trafic.

La modification de l'AS PATH par une action nommée PREPENDING permet à un système autonome local d'augmenter la taille de l'attribut AS PATH artificiellement, notamment en ajoutant plusieurs fois son propre numéro. Un système autonome dans l'Internet ayant plusieurs chemins pour une destination préfère celui avec l'AS PATH le plus court.

Par exemple, un système autonome local peut augmenter artificiellement la taille d'un attribut AS PATH de type « 1 2 3 », représentatif d'un certain chemin que le trafic peut prendre, en ajoutant plusieurs fois son propre numéro (ex. « 1 2 2 2 3 »). S'il existe un chemin alternatif qui passe par un autre système autonome (ex. « 1 4 3 ») et qui, comme la taille de son attribut AS PATH n'a pas été augmentée artificiellement, a l'air d'être plus court, ce chemin sera préféré par rapport au chemin avec l'attribut AS PATH dont la taille a été augmentée (« 1 2 2 2 3 »).

L'attribut MED (pour « Multi Exit Discriminator ») peut être échangé entre systèmes autonomes voisins et indiquer le point d'entrée préféré du système autonome local pour le trafic en provenance de systèmes autonomes voisins et à destination du système autonome local. La modification de l'attribut MED permet d'influencer le point d'entrée du trafic en provenance de systèmes autonomes voisins dans un système autonome local. Le trafic va préférer le chemin avec une valeur MED basse par rapport à un chemin avec une valeur MED élevée. Potentiellement, la modification de l'attribut MED peut être la troisième action la plus forte, après la modification de l'AS PATH par PREPENDING et la modification du PREFIX par LOAD SHARING.

Souvent une modification d'un attribut BGP ne provoque pas une modification instantanée d'une répartition du trafic. Un certain temps peut être nécessaire pour l'information correspondante pour propager et déployer ses effets.

La prise en compte d'un délai de propagation des préfixes permet à l'intelligence artificielle d'adapter et d'optimiser les actions déclenchées.

Ce délai peut être de l'ordre de plusieurs secondes à plusieurs minutes.

Le dispositif de décision peut réitérer, lors d'une étape 104, les première 101, deuxième 102 et troisième 103 étapes aussi souvent que nécessaire. L'objectif peut être une mise en œuvre du procédé qui permet une surveillance et optimisation permanentes de l'état de charge de l'ensemble de liens.

Souvent il n'est pas possible d'atteindre un état de charge souhaité en déclenchant une seule fois un ensemble d'actions. La réitération du procédé permet, dans chaque itération, d'apprendre à partir d'actions antérieures, et de converger, au fur et à mesure, vers un état souhaité. Ainsi, l'intelligence artificielle peut apprendre, dans un processus itératif, la relation entre les actions déclenchées et les effets des actions sur l'état de charge, pour un état de charge donné.

L'état souhaité peut être un état prédéfini ou un état considéré comme avantageux par l'intelligence artificielle.

La réitération peut être faite à fréquence constante ou variable. Dans un mode de réalisation, la fréquence de réitération pour un état de charge non-souhaitée peut être plus élevée que pour un état de charge souhaité. Si toutefois l'état de charge correspond à un état de charge optimal, il peut être suffisant de contrôler l'état de charge moins souvent, c'est à-dire à fréquence plus basse.

L'intelligence artificielle peut être configurée pour apprendre à identifier, sur la base de résultats successifs de la fonction de récompense, les actions qui permettent de répartir le trafic sur l'ensemble de liens de sorte à optimiser l'état de charge sur l'ensemble de liens.

Si le résultat de la fonction de récompense atteint ou dépasse une valeur de référence, l'intelligence artificielle peut considérer avoir atteint un état optimal, bien qu'il puisse s'agir d'un extremum local de la fonction de récompense. L'état de charge peut être piégé dans une boucle et osciller entre deux ou plusieurs états sous-optimaux.

Pour remédier à de tels problèmes, le procédé peut en outre comprendre une étape de déclenchement d'actions influant sur une répartition du trafic de manière aléatoire sur au moins une partie de l'ensemble de liens. Une répartition du trafic de manière aléatoire, bien que cette répartition ne soit pas a priori considérée comme utile, peut faire découvrir à l'intelligence artificielle les effets de nouvelles actions sur un état de charge donné.

Dans un mode de réalisation, l'intelligence artificielle peut comprendre un réseau de neurones.

La figure 3 décrit un tel réseau de neurones, configuré pour identifier des actions à déclencher dans la mise en œuvre du procédé de répartition de trafic sur un ensemble de liens selon la figure 2, et pour le système selon la figure 1.

Un réseau de neurones est spécialement adapté pour la mise en œuvre d'un apprentissage par l'expérience, dit « apprentissage automatique », tel que décrit ci-dessus.

Dans un mode de réalisation, le réseau de neurones peut être un réseau de neurones profond. Un réseau de neurones profond peut comporter des millions de neurones, répartis en plusieurs dizaines de couches. Ils peuvent être utilisés en apprentissage profond (« deep learning » en anglais) pour concevoir des mécanismes d'apprentissage.

Le procédé selon l'exemple de réalisation décrit ici concerne un apprentissage non-supervisé, dans lequel le réseau de neurones peut s'entraîner, après une ou plusieurs itérations du procédé, et apprendre quelles actions déclenchées par lui optimisent le résultat de la fonction de récompense.

Dans un mode de réalisation particulier non-limitatif, l'apprentissage peut être supervisé, et un technicien peut intervenir pour « indiquer » au réseau de neurones certains états de charge considérés comme favorable ou non-favorable. Une telle intervention peut être utile notamment si le déclenchement d'actions influant sur une répartition du trafic de manière aléatoire ne permet pas à un état de charge de sortir d'un état sous-optimal.

Un réseau de neurones peut comprendre une couche d'entrée inL, une ou plusieurs couches intermédiaires hidL disposées l'une après l'autre en série, et une couche de sortie outL.

La couche d'entrée inL peut recevoir les données à analyser/à traiter, et transmettre les données reçues à la première couche intermédiaire située en aval de la couche d'entrée. Les données traitées par première couche intermédiaire peuvent être transmises à la deuxième couche intermédiaire et ainsi de suite, jusqu'à la couche de sortie. Les couches intermédiaires hidL peuvent mettre en œuvre des transformations non-linéaires des données.

Chaque couche du réseau de neurones peut comprendre une pluralité de nœuds.

Chacun des nœuds de la couche d'entrée inL peut être configuré pour recevoir ou émettre des données sous différentes formes, par exemple sous forme de vecteurs ou de matrices.

En l'espèce, la couche d'entrée inL peut comprendre neuf nœuds, à savoir :

- trois nœuds pour recevoir une information relative au trafic sur les liens L100, L200, L300 ;
- trois nœuds pour recevoir une information représentative du type des systèmes autonomes voisins AS100, AS200, AS300.
- trois nœuds pour recevoir une information représentative des préfixes 10.0.1.0/24, 10.0.2.0/24, 10.0.3.0/24 annoncées par le système autonome local AS1 sur les liens L100, L200, L300. Un nœud donné peut recevoir l'information relative aux préfixes annoncés sur un lien donné.

La couche de sortie outL peut être située en aval de la dernière couche intermédiaire et prendre comme entrée les résultats de la dernière couche intermédiaire pour produire les résultats du système.

Les résultats produits par la couche de sortie outL peuvent être les actions à déclencher qui influent sur une répartition du trafic sur l'ensemble de liens de sorte à optimiser l'état de charge de l'ensemble de liens.

La couche de sortie outL peut comprendre une pluralité de nœuds indiquant de quelle manière doivent être modifiées les trois attributs MED, AS PATH, et PREFIX. Chaque nœud peut être configuré pour indiquer une action particulière pour un lien donné.

En l'espèce, la couche de sortie outL peut comprendre neufs nœuds. Chacun des nœuds peut indiquer si la valeur de l'attribut respectif (MED, AS PATH, PREFIX) annoncé sur le lien respectif L100, L200, L300 doit être augmentée, diminuée, ou rester inchangée.

L'apprentissage tel que décrit consistant à apprendre les actions à déclencher, à partir d'expériences avec son environnement, de façon à optimiser le résultat de la fonction de récompense au cours du temps, est appelé apprentissage par renforcement.

Dans un mode de réalisation, l'apprentissage par renforcement peut comprendre la technique de « Q-learning ». La technique de « Q-learning » n'utilise aucun modèle décrivant la stratégie décisionnelle (permettant d'attribuer une action donnée à un état donné). La stratégie décisionnelle est apprise, par le réseau de neurones, au cours du temps par exploration d'actions (i. e. déclenchement de nouvelles actions pour un état de charge donné) ou exploitation d'actions (i. e. déclenchement d'actions déjà connus).

Lors de l'apprentissage itératif du réseau de neurones, la relation entre l'état de charge initial de l'ensemble de liens (c'est-à-dire avant le déclenchement d'une action), le résultat de la fonction de récompense, et l'action déclenchée qui agit sur l'état de charge initial peut être enregistrée et mémorisée par le réseau de neurones. Quand une certaine action déclenchée en réponse à un état de charge initial donné améliore ou n'améliore pas le résultat de la fonction de récompense, cette relation peut être enregistrée par le réseau de neurones. Ainsi, une base de données de référence peut être créée et améliorée au cours du temps. De cette façon, le réseau de neurones « saura », quelle(s) action(s) doivent être déclenchées ou ne pas être déclencheés lorsqu'un état de charge donné apparait.

Aucune connaissance préalable sur l'état du système n'est requise. Le réseau de neurones peut être configuré pour découvrir, au fur et à mesure, sur la base du résultat de la fonction de récompense, par exemple en comparant le résultat de la fonction de récompense à une valeur de référence, les actions qui mènent à une optimisation du trafic et de l'état de charge des liens.

L'apprentissage permet au réseau de neurones de s'entraîner et d'apprendre, après une ou plusieurs itérations du procédé, les effets des actions déclenchées précédemment, sur l'état de charge de l'ensemble de liens. Le réseau de neurones peut alors choisir, selon des précédents similaires, des actions de manière à optimiser l'état de charge des liens représenté par le résultat de la fonction de récompense. Les actions que le réseau de neurones considère comme avantageuses peuvent donc varier à chaque itération.

Dans le cas classique d'un réseau de neurones (avec une mise à jour de coefficients de pondération affectant les liens entre les nœuds, par exemple à chaque itération) on peut prévoir, en fonction d'observations à un instant donné, de mettre à jour ces coefficients de pondération en fonction du résultat obtenu de la fonction de récompense. Ces coefficients peuvent être mis à jour chaque fois qu'un nouveau résultat de la fonction de récompense est obtenu, typiquement. La mise à jour des coefficients de pondération peut être faite par la technique de rétro-propagation du gradient. Cette technique permet au réseau de neurones de s'entraîner en utilisant le gradient des coefficients de pondération par rapport à une fonction d'erreur. Cette fonction d'erreur peut être le résultat des différences entre les résultats produits par le réseau de neurones et des résultats souhaitées. La technique de « Q-Learning » permet de calculer les résultats souhaités en fonction du résultat de la fonction de récompense.

Dans une variante, le réseau de neurones peut commencer non pas à « zéro », c'est-à-dire sans connaissances préalables, mais se fonder sur des connaissances antérieures relatives à des propriétés du système ou à des effets d'actions déclenchées antérieurement.

Il est possible de jouer sur les différents paramètres de l'architecture du réseau : le nombre de couches, le type de chaque couche, le nombre de neurones qui composent chaque couche. Plus on augmente le nombre de couches, plus les réseaux de neurones sont susceptibles d'apprendre des phénomènes complexes.

La mise en œuvre du procédé selon la présente invention est illustrée à l'aide d'un exemple numérique, pour le cas du système montré dans la figure 1.

Un système autonome local AS1 peut être connecté à trois systèmes autonomes voisins ASi, avec i = 100, 200, 300. AS100 peut être un système client, AS200 un système pair et A300 un système fournisseur.

AS1 peut annoncer trois préfixes $Pa_{AS1-ASi,j}$ relatifs aux réseaux qu'il héberge : $Pa_{AS1-ASi,1}$ = 10.0.1.0/24, $Pa_{AS1-ASi,2}$ = 10.0.2.0/24, et $Pa_{AS1-ASi,3}$ = 10.0.3.0/24. Chacun de ces trois préfixes peut être annoncé sur chacun des trois liens $Li$ connectant AS1 à AS100 (lien L100), AS1 à AS200 (lien L200), et AS1 à AS300 (lien L300).

Il y a en outre deux systèmes autonomes AS2 et AS3 connectés aux systèmes AS100, AS200 et AS300 via Internet.

AS2 et AS3 peuvent annoncer un préfixe $Pr_k$ chacun (k = 2, 3 ; $Pr_2$ étant le préfixe annoncé par AS2, et $Pr_3$ étant le préfixe annoncé par AS3) : $Pr_2$ = 11.0.1.0/24 et $Pr_3$ = 12.0.1.0/24. L'information relative aux préfixes annoncés peut être transmise à AS1 par l'intermédiaire d'un ou plusieurs de ses voisins directs (AS100, AS200, AS300).

Les systèmes autonomes voisins AS100, AS200 et AS300 n'annoncent pas de préfixes.

L'information reçue par AS1 peut comprendre :

- $Pa_{AS1-ASi,j}$ : tous les préfixes annoncés par AS1 sur le lien $L_i$ ;
- $Pr_k$ : tous les préfixes reçus par AS1, correspondant aux préfixes annoncés par AS2 et AS3 ;
- $locpref_k$ : l'attribut LOCAL PREF pour les préfixes $Pr_k$ reçus par AS1.

De plus, AS1 peut recevoir une information représentative d'un état de charge des liens interconnectant AS1 avec ses voisins AS100, AS200 et AS300. Cette information peut comprendre des informations sur :

$T_{AS1-ASi,j}$ : trafic entrant dans AS1 pour les préfixes $Pa_{AS1-ASi,j}$ annoncés sur le lien Li.

En outre, l'information reçue par AS1 peut être représentative d'un type de système autonome pour chacun des systèmes autonomes voisins. L'information peut indiquer qu'AS100 est un système client, AS200 un système pair et A300 un système fournisseur.

L'information reçue peut comprendre des informations sur l'attribut AS PATH et sur l'attribut MED pour chacun des préfixes $Pa_{AS1-ASi,j}$ annoncés par AS1.

De plus, l'information reçue peut comprendre la capacité $C_{AS1-ASi}$ des liens L100, L200 et L300.

L'intelligence artificielle peut déterminer, à partir de l'information reçue, le résultat de la fonction de récompense. La fonction de récompense $f_{récompense}$ peut être calculée comme la somme d'un score relatif aux préférences des systèmes autonomes voisins ($score_{pref}$) et d'un score relatif au trafic reçu par AS1 ($score_{traf}$) : $f_{récompense} = score_{pref} + score_{traf}$.

$score_{pref}$ peut être calculé comme suit : $score_{pref} = \sum_k LP_k * accord$ ;

$$LP_k = \frac{locpref_k - \min(\text{LOCALPREF})}{\max(\text{LOCALPREF}) - \min(\text{LOCALPREF})} ;$$

k = 2, 3 ; $LP_2$ et $locpref_2$ étant des variables décrivant AS2, et $LP_3$ et $locpref_3$ étant des variables décrivant AS3 ; et accord = 1 pour le fournisseur ; accord = 2 pour le pair ; accord = 3 pour le client.

La variable « accord » indique les préférences du système autonome local AS1. Par exemple, si AS1 est un système autonome fournisseur tel qu'un opérateur mobile, il peut être préférable que les liens du système autonome client AS100 soient utilisés pour acheminer du trafic, plutôt que les liens du système autonome fournisseur AS300. La variable « accord » a donc une valeur plus élevée pour un client que pour un fournisseur.

LOCALPREF peut être une matrice comprenant l'attribut LOCAL PREF pour chacun des préfixes reçus par AS1.

$score_{traf}$ peut être calculé comme suit :

$$score_{traf} = \sum_i C_i / T_i \text{ avec } C_i = C_{AS1-ASi} \text{ et } T_i = \sum_j T_{As1-Asi,j}.$$

L'information reçue par AS1 peut être sous la forme de la matrice suivante, pour chacun des liens L100, L200 et L300 :

$$[L_i, <C_{AS1-ASi}>, [<Pa_{AS1-ASi,j}>, <T_{AS1-ASi,j}>], [<Pr_k>, <locpref_k>]]$$

Par la suite, un exemple numérique va être considéré.

Pour le lien L100, l'information reçue peut être la suivante :

[L100, 10Gbps, **[[10.0.1.0/24, 11 Gbps]**, [10.0.2.0/24, 0Gbps], [10.0.3.0/24, 0Gbps]], [[11.0.1.0/24, 100], [12.0.1.0/24, 100]]].

Pour le préfixe 10.0.1.0/24, le trafic entre dans le système autonome local AS1 par le lien L100.

Pour le lien L200, l'information reçue peut être la suivante :

[L200, 5Gbps, [[10.0.1.0/24, 0Gbps], **[10.0.2.0/24, 7Gbps]**, [10.0.3.0/24, 0Gbps]], [[11.0.1.0/24, 200], [12.0.1.0/24, 100]]].

Pour le préfixe 10.0.2.0/24, le trafic entre dans le système autonome local AS1 par le lien L200.

Pour le lien L300, l'information reçue peut être la suivante :

[L300, 20Gbps, [[10.0.1.0/24, 0Gbps], [10.0.2.0/24, 0Gbps], **[10.0.3.0/24, 6Gbps]]**, [[11.0.1.0/24, 100], [12.0.1.0/24, 300]]].

Pour le préfixe 10.0.3.0/24, le trafic entre dans le système autonome local AS1 par le lien L300.

La valeur de l'attribut MED peut être égale à 500 pour tous les trois préfixes annoncés par AS1 sur chacun des trois liens L100, L200 et L300.

Le résultat de la fonction de récompense est donc :

$$f_{récompense} = score_{pref} + score_{tra} = 2 + 4.95 = 6.95.$$

L'intelligence artificielle peut analyser le résultat de la fonction de récompense, par exemple en le comparant à une valeur de référence, et essayer de l'améliorer par la suite.

Le résultat de la fonction de récompense ainsi calculé permet à l'intelligence artificielle, seul ou en combinaison avec certaines valeurs des matrices reçues pour chacun des liens L100, L200 et L300, d'identifier des actions à déclencher influant sur le trafic sur les liens.

A cet effet, les attributs BGP (MED, AS PATH, PREFIX) peuvent être modifiés, notamment augmentés ou diminués, sur un ou plusieurs liens Li.

On peut voir dans la matrice reçue pour le premier lien L100 qu'il y a une congestion de trafic pour le préfixe 10.0.1.0/24 (la capacité $C_{AS1-AS100}$ du lien L100 est 10 Gbps, mais le trafic entrant $T_{AS1-AS1,1}$ est 11 Gbps).

Pour améliorer cet état de charge sous-optimal, l'attribut MED du préfixe 10.0.1.0/24 peut être modifié pour le lien L300 :

L100 : MED inchangé ; L200 : MED inchangé ; L300 : MED 500 -> 400.

Comme le trafic va préférer un lien avec une valeur MED basse, cette action a le potentiel d'augmenter le trafic sur le lien L300 et donc de résoudre le problème de congestion de trafic sur le lien L100.

On peut voir dans la matrice reçue pour le deuxième lien L200 qu'il y a une congestion de trafic pour le préfixe 10.0.2.0/24 (la capacité $C_{AS1-AS200}$ du lien L200 est 5 Gbps, mais le trafic entrant $T_{AS1-AS2,2}$ est 7 Gbps).

Pour améliorer cet état de charge sous-optimal, l'attribut MED du préfixe 10.0.2.0/24 peut être modifié dans L100 :

L100 : MED 500 -> 400 ; L200 : MED inchangé ; L300 : MED inchangé.

Comme le trafic va préférer un lien avec une valeur MED basse, cette action a le potentiel d'augmenter le trafic sur le lien L100 et donc de résoudre le problème de congestion de trafic sur le lien L200.

En outre, pour améliorer l'état relatif à la congestion de trafic sur le lien L200, l'attribut AS PATH peut être modifié pour le préfixe 10.0.2.0/24 sur le lien L200 : L100 : AS PATH inchangé ; L200 : AS PATH i -> 1 1 1 1 i ; L300 : AS PATH inchangé.

Cette modification a le potentiel, en plus de l'action déjà effectuée (L100 : MED 500 -> 400), de résoudre la congestion de trafic sur le lien L200.

Si l'état de charge n'est toujours pas satisfaisant, d'autres actions peuvent être déclenchées.

Le procédé peut être réitéré après chaque action déclenchée. Dans chaque itération, une nouvelle information représentative de l'état de charge des liens peut être reçue, et un nouveau résultat de la fonction de récompense peut déterminée.

En alternative, plusieurs actions peuvent être déclenchées de suite avant de réitérer le procédé.

La figure 4 montre un dispositif de décision 301 pour répartir un trafic sur un ensemble de liens interconnectant un système autonome local avec une pluralité de systèmes autonomes voisins du système autonome local.

Le dispositif peut être mis en œuvre par le système autonome local.

Dans un mode de réalisation, le dispositif peut être intégrée dans le système autonome local et être configuré pour répartir un trafic sur un ensemble de liens interconnectant le système autonome local avec les systèmes autonomes voisins.

Le dispositif de décision 301 est adapté pour mettre en œuvre le procédé décrit par la figure 2.

Dans ce mode de réalisation, le dispositif de décision 301 comporte au moins une interface d'entrée 302 pour la réception de messages ou instructions, et au moins une interface de sortie 303 pour la communication avec des dispositifs externes 306 tels qu'un ou plusieurs systèmes autonomes voisins ou les routeurs BGP interconnectant les systèmes autonomes.

L'au moins une interface d'entrée 302 peut être configurée pour :

/a/ recevoir une information représentative :

- d'un état de charge de l'ensemble de liens ;
- d'un type de système autonome pour chacun des systèmes autonomes voisins ; et
- de préfixes relatifs à des réseaux hébergés par le système autonome local et les systèmes autonomes voisins, les préfixes étant annoncés par un système autonome à ses voisins.

Le dispositif de décision 301 comprend en outre une mémoire 304 pour stocker des instructions permettant la mise en œuvre d'une partie au moins du procédé, les données reçues, et des données temporaires pour réaliser les différentes étapes 104, 102, 103 et 104 et opérations du procédé telles que décrites précédemment.

Le dispositif de décision 301 comporte en outre un circuit de traitement 305. Ce circuit peut être, par exemple :

- un processeur apte à interpréter des instructions sous la forme de programme informatique, ou
- une carte électronique dont les étapes 101, 102, 103 et 104 et opérations du procédé de la divulgation peuvent être décrites dans le silicium, ou encore
- une puce électronique programmable comme une puce FPGA pour « *Field-Programmable Gate Array* » en anglais, comme un SOC pour « *System On Chip* » en anglais ou comme un ASIC pour « *Application Specific Integrated Circuit* » an anglais.

Les SOC ou systèmes sur puce sont des systèmes embarqués qui intègrent tous les composants d'un système électronique dans une puce unique. Un ASIC est un circuit électronique spécialisé qui regroupe des fonctionnalités sur mesure pour une application donnée. Les ASIC sont généralement configurés lors de leur fabrication et ne peuvent être que simulés par un opérateur du dispositif de décision 301. Les circuits logiques programmables de type FPGA sont des circuits électroniques reconfigurables par l'opérateur du dispositif de décision 301.

Le circuit de traitement 305 peut être configuré pour :

/b/ déterminer, à partir de l'information reçue, un résultat d'une fonction de récompense, représentatif d'un état dudit ensemble de liens ;
/c/ déclencher, en fonction de l'information reçue et du résultat de la fonction de récompense, au moins une action influant sur une répartition du trafic sur l'ensemble de liens de sorte à optimiser l'état de charge de l'ensemble de liens ; et
/d/ réitérer les étapes /a/ à /c/.

Le système autonome local peut comprendre une intelligence artificielle configurée pour apprendre à identifier, sur la base de résultats successifs de la fonction de récompense, les actions qui permettent de répartir le trafic sur l'ensemble de liens de sorte à optimiser l'état de charge de l'ensemble liens.

En fonction du mode de réalisation, le dispositif de décision 301 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support non représentés sur la figure 4. Le support de stockage amovible peut être, par exemple, un disque compact CD, un disque vidéo/polyvalent numérique DVD, un disque flash, une clé USB, etc.

En fonction du mode de réalisation, la mémoire 304, l'unité de stockage de données ou le support de stockage amovible contiennent des instructions qui, lorsqu'elles sont exécutées par le circuit de traitement 305, amènent ce circuit à effectuer ou contrôler l'au moins une interface d'entrée 302, l'au moins une interface de sortie 303, le stockage de données dans la mémoire 304 et/ou le traitement de données et/ou la mise en œuvre d'au moins une partie du procédé selon la figure 2.

Le circuit de traitement 305 peut être un composant implémentant le pilotage du dispositif de décision 301.

En outre, le dispositif de décision 301 peut être mis en œuvre sous forme logicielle, auquel cas il prend la forme d'un programme exécutable par un processeur, ou sous forme matérielle, ou « *hardware* », comme un circuit intégré spécifique application ASIC, un système sur puce SOC, ou sous forme d'une combinaison d'éléments matériels et logiciels, par exemple un programme logiciel destiné à être chargé et exécuté sur un composant électronique décrit ci-avant tel que FPGA, processeur.

Le dispositif de décision 301 peut également utiliser des architectures hybrides, par exemple des architectures basées sur un CPU+FPGA, un GPU pour « *Graphics Processing Unit* » ou un MPPA pour « *Multi-Purpose Processor Array* ».

Le dispositif de décision 301 peut contrôler les réseaux hébergés par le système autonome local.

La présente divulgation permet de répartir un trafic sur un ensemble de liens interconnectant un système autonome local avec une pluralité de systèmes autonomes voisins du système autonome local.

La présente divulgation ne se limite pas aux exemples de dispositifs, systèmes, procédés, utilisations et produits programmes informatiques décrits ci-avant, seulement à titre d'exemple, mais elle englobe toutes les variantes que pourra envisager la personne du métier dans le cadre de la protection recherchée.

**Revendications**

1. Procédé de répartition de trafic sur un ensemble de liens (L100, L200, L300) interconnectant un système autonome local (AS1) avec une pluralité de systèmes autonomes voisins (AS100, AS200, AS300) du système autonome local (AS1), le procédé comprenant :

   /a/ recevoir (101) une information au moins relative à des caractéristiques de la pluralité de systèmes autonomes voisins (AS100, AS200, AS300) ;
   /b/ déterminer (102), à partir de l'information reçue, un résultat d'une fonction de récompense, représentatif d'un état dudit ensemble de liens ;
   /c/ déclencher (103), en fonction de l'information reçue et du résultat de la fonction de récompense, au moins une action influant sur une répartition du trafic sur l'ensemble de liens (L100, L200, L300) de sorte à optimiser l'état de charge de l'ensemble de liens (L100, L200, L300) ;
   /d/ réitérer (104) les étapes /a/ à /c/ ;
   l'au moins une action étant identifiée par une intelligence artificielle configurée pour apprendre à identifier, sur la base de résultats successifs de la fonction de récompense, des actions permettant de répartir le trafic sur l'ensemble de liens (L100, L200, L300) de sorte à optimiser l'état de charge de l'ensemble de liens (L100, L200, L300),
   dans lequel l'information reçue selon l'étape /a/ est représentative :

   - d'un état de charge de l'ensemble de liens (L100, L200, L300) ;
   - d'un type de système autonome pour chacun des systèmes autonomes voisins (AS100, AS200, AS300) ; et
   - de préfixes relatifs à des réseaux hébergés par le système autonome local (AS1) et les systèmes autonomes voisins (AS100, AS200, AS300), les préfixes étant annoncés par un système autonome à ses voisins.

2. Procédé selon la revendication 1, dans lequel l'intelligence artificielle comprend un réseau de neurones.

3. Procédé selon l'une quelconque des revendications précédentes, dans lequel l'optimisation de l'état de charge selon l'étape /c/ comprend la convergence de l'état de charge vers un état de charge souhaité.

4. Procédé selon l'une quelconque des revendications précédentes, dans lequel le type de système autonome est un système autonome client, un système autonome pair ou un système autonome fournisseur.

5. Procédé selon l'une quelconque des revendications précédentes, dans lequel l'au moins une action déclenchée selon l'étape /c/ comprend la modification d'au moins un attribut BGP pour « Border Gateway Protocol ».

6. Procédé selon la revendication 5, dans lequel la modification de l'au moins un attribut BGP comprend la modification d'au moins un attribut BGP parmi : MED, AS PATH, PREFIX.

7. Procédé selon l'une quelconque des revendications 5 ou 6, dans lequel la modification de l'au moins un attribut BGP prend en compte un délai de propagation de préfixes à annoncer.

8. Procédé selon l'une quelconque des revendications précédentes, dans lequel le procédé comprend une étape de déclenchement d'au moins une action influant sur une répartition du trafic de manière aléatoire sur au moins une partie de l'ensemble de liens (L100, L200, L300).

9. Dispositif de décision (301) pour répartir un trafic sur un ensemble de liens (L100, L200, L300) interconnectant un système autonome local (AS1) avec une pluralité de systèmes autonomes voisins (AS100, AS200, AS300) du système autonome local (AS1), le dispositif comprenant :

- au moins une interface (302) configurée pour :
/a/ recevoir une information au moins relative à des caractéristiques de la pluralité de systèmes autonomes voisins (AS100, AS200, AS300) ;
- au moins un circuit de traitement (305) configuré pour :

/b/ déterminer, à partir de l'information reçue, un résultat d'une fonction de récompense, représentatif d'un état dudit ensemble de liens ;
/c/ déclencher, en fonction de l'information reçue et du résultat de la fonction de récompense, au moins une action influant sur une répartition du trafic sur l'ensemble de liens (L100, L200, L300) de sorte à optimiser l'état de charge de l'ensemble de liens (L100, L200, L300) ;
/d/ réitérer les étapes /a/ à /c/ ;
le dispositif comprenant une intelligence artificielle configurée pour apprendre à identifier, sur la base de résultats successifs de la fonction de récompense, l'au moins une action qui permet de répartir le trafic sur l'ensemble de liens (L100, L200, L300) de sorte à optimiser l'état de charge de l'ensemble liens (L100, L200, L300) dans lequel l'information reçue selon l'étape /a/ est représentative :

- d'un état de charge de l'ensemble de liens (L100, L200, L300) ;
- d'un type de système autonome pour chacun des systèmes autonomes voisins (AS100, AS200, AS300) ; et
- de préfixes relatifs à des réseaux hébergés par le système autonome local (AS1) et les systèmes autonomes voisins (AS100, AS200, AS300), les préfixes étant annoncés par un système autonome à ses voisins.

10. Produit programme informatique comportant des instructions qui, lorsque ces instructions sont exécutées par un processeur, conduisent celui-ci à mettre en œuvre les étapes du procédé selon l'une quelconque des revendications 1 à 8.

**Patentansprüche**

1. Verfahren zur Verteilung von Verkehr auf einer Menge von Verbindungen (L100, L200, L300), die ein lokales autonomes System (AS1) mit einer Mehrzahl von benachbarten autonomen Systemen (AS100, AS200, AS300) des lokalen autonomen Systems (AS1) zusammenschalten, umfassend:

/a/ Empfangen (101) einer Information mindestens bezüglich von Merkmalen der Mehrzahl von benachbarten autonomen Systemen (AS100, AS200, AS300);
/b/ Ermitteln (102), ausgehend von der empfangenen Information, eines Ergebnisses einer Belohnungsfunktion, das für einen Zustand der Menge von Verbindungen repräsentativ ist;
/c/ Auslösen (103), in Abhängigkeit von der empfangenen Information und von dem Ergebnis der Belohnungsfunktion, mindestens einer Aktion, die eine Verteilung des Verkehrs auf der Menge von Verbindungen (L100, L200, L300) beeinflusst, so dass der Auslastungszustand der Menge von Verbindungen (L100, L200, L300) optimiert wird;
/d/ Wiederholen (104) der Schritte /a/ bis /c/;
wobei mindestens eine Aktion durch eine künstliche Intelligenz identifiziert wird, die dazu ausgestaltet ist zu lernen, auf der Grundlage von aufeinander folgenden Ergebnissen der Belohnungsfunktion Aktionen zu identifizieren, die es ermöglichen, den Verkehr auf der Menge von Verbindungen (L100, L200, L300) so zu verteilen, dass der Auslastungszustand der Menge von Verbindungen (L100, L200, L300) optimiert wird, wobei die gemäß dem Schritt /a/ empfangene Information repräsentativ ist für:

- einen Auslastungszustand der Menge von Verbindungen (L100, L200, L300);

- einen Typ eines autonomen Systems für jedes der benachbarten autonomen Systeme (AS100, AS200, AS300); und
- Präfixe bezüglich von Netzen, die von dem lokalen autonomen System (AS1) und den benachbarten autonomen Systemen (AS100, AS200, AS300) gehostet werden, wobei die Präfixe von einem autonomen System seinen Nachbarn angekündigt werden.

2. Verfahren nach Anspruch 1, wobei die künstliche Intelligenz ein neuronales Netz umfasst.

3. Verfahren nach einem der vorhergehenden Ansprüche, wobei die Optimierung des Auslastungszustands gemäß dem Schritt /c/ die Konvergenz des Auslastungszustands zu einem gewünschten Auslastungszustand hin umfasst.

4. Verfahren nach einem der vorhergehenden Ansprüche, wobei de Typ des autonomen Systems ein autonomes Client-System, ein autonomes Peer-System oder ein autonomes Anbieter-System ist.

5. Verfahren nach einem der vorhergehenden Ansprüche, wobei die mindestens eine gemäß dem Schritt /c/ ausgelöste Aktion die Änderung mindestens eines BGP-Attributs für "Border Gateway Protocol" umfasst.

6. Verfahren nach Anspruch 5, wobei die Änderung des mindestens einen BGP-Attributs die Änderung mindestens eines BGP-Attributs umfasst unter: MED, AS PATH, PREFIX.

7. Verfahren nach einem der Ansprüche 5 oder 6, wobei die Änderung des mindestens einen BGP-Attributs eine Laufzeit von anzukündigenden Präfixen berücksichtigt.

8. Verfahren nach einem der vorhergehenden Ansprüche, wobei das Verfahren einen Schritt des Auslösens mindestens einer Aktion umfasst, die eine zufällige Verteilung des Verkehrs auf mindestens einen Teil der Menge von Verbindungen (L100, L200, L300) beeinflusst.

9. Entscheidungsvorrichtung (301), um einen Verkehr auf einer Menge von Verbindungen (L100, L200, L300) zu verteilen, die ein lokales autonomes System (AS1) mit einer Mehrzahl von benachbarten autonomen Systemen (AS100, AS200, AS300) des lokalen autonomen Systems (AS1) zusammenschalten, die Vorrichtung umfassend:

- mindestens eine Schnittstelle (302), die dazu ausgestaltet ist:
/a/ eine Information mindestens bezüglich von Merkmalen der Mehrzahl von benachbarten autonomen Systemen (AS100, AS200, AS300) zu empfangen;
- mindestens eine Verarbeitungsschaltung (305), die dazu ausgestaltet ist:

/b/ ausgehend von der empfangenen Information ein Ergebnis einer Belohnungsfunktion zu ermitteln, das für einen Zustand der Menge von Verbindungen repräsentativ ist;
/c/ in Abhängigkeit von der empfangenen Information und von dem Ergebnis der Belohnungsfunktion mindestens eine Aktion auszulösen, die eine Verteilung des Verkehrs auf der Menge von Verbindungen (L100, L200, L300) beeinflusst, so dass der Auslastungszustand der Menge von Verbindungen (L100, L200, L300) optimiert wird;
/d/ die Schritte /a/ bis /c/ zu wiederholen;
wobei die Vorrichtung eine künstliche Intelligenz umfasst, die dazu ausgestaltet ist zu lernen, auf der Grundlage von aufeinander folgenden Ergebnissen der Belohnungsfunktion die mindestens eine Aktion zu identifizieren, die es ermöglicht, den Verkehr auf der Menge von Verbindungen (L100, L200, L300) so zu verteilen, dass der Auslastungszustand der Menge von Verbindungen (L100, L200, L300) optimiert wird, wobei die gemäß dem Schritt /a/ empfangene Information repräsentativ ist für:

- einen Auslastungszustand der Menge von Verbindungen (L100, L200, L300);
- einen Typ eines autonomen Systems für jedes der benachbarten autonomen Systeme (AS100, AS200, AS300); und
- Präfixe bezüglich von Netzen, die von dem lokalen autonomen System (AS1) und den benachbarten autonomen Systemen (AS100, AS200, AS300) gehostet werden, wobei die Präfixe von einem autonomen System seinen Nachbarn angekündigt werden.

10. Computerprogrammprodukt, das Anweisungen beinhaltet, die, wenn diese Anweisungen von einem Prozessor ausgeführt werden, diesen veranlassen, die Schritte des Verfahrens nach einem der Ansprüche 1 bis 8 auszuführen.

**Claims**

1. Method for distributing traffic over a set of links (L100, L200, L300) interconnecting a local autonomous system (AS1) with a plurality of neighbouring autonomous systems (AS100, AS200, AS300) of the local autonomous system (AS1), the method comprising:

   /a/ receiving (101) information at least relating to characteristics of the plurality of neighbouring autonomous systems (AS100, AS200, AS300);
   /b/ determining (102), on the basis of the information received, a result of a reward function, which is representative of a state of said set of links;
   /c/ triggering (103), depending on the information received and the result of the reward function, at least one action influencing a distribution of the traffic over the set of links (L100, L200, L300) so as to optimize the load state of the set of links (L100, L200, L300);
   /d/ repeating (104) steps /a/ to /c/;
   the at least one action being identified by an artificial intelligence configured to learn to identify, based on successive results of the reward function, actions making it possible to distribute the traffic over the set of links (L100, L200, L300) so as to optimize the load state of the set of links (L100, L200, L300), wherein the information received according to step /a/ is representative of:

   - a load state of the set of links (L100, L200, L300);
   - a type of autonomous system for each of the neighbouring autonomous systems (AS100, AS200, AS300); and
   - prefixes relating to networks hosted by the local autonomous system (AS1) and the neighbouring autonomous systems (AS100, AS200, AS300), the prefixes being advertised by an autonomous system to its neighbours.

2. Method according to Claim 1, wherein the artificial intelligence comprises a neural network.

3. Method according to either one of the preceding claims, wherein optimizing the load state according to step /c/ comprises the convergence of the load state towards a desired load state.

4. Method according to any one of the preceding claims, wherein the type of autonomous system is a client autonomous system, a peer autonomous system or a provider autonomous system.

5. Method according to any one of the preceding claims, wherein the at least one action triggered according to step /c/ comprises modifying at least one BGP, or Border Gateway Protocol, attribute.

6. Method according to Claim 5, wherein modifying the at least one BGP attribute comprises modifying at least one BGP attribute from among: MED, AS PATH, PREFIX.

7. Method according to either one of Claims 5 and 6, wherein the modification of the at least one BGP attribute takes into account a delay in the propagation of prefixes to be advertised.

8. Method according to any one of the preceding claims, wherein the method comprises a step of triggering at least one action influencing a distribution of the traffic randomly over at least part of the set of links (L100, L200, L300).

9. Decision device (301) for distributing traffic over a set of links (L100, L200, L300) interconnecting a local autonomous system (AS1) with a plurality of neighbouring autonomous systems (AS100, AS200, AS300) of the local autonomous system (AS1), the device comprising:

   - at least one interface (302) configured to:
   /a/ receive information at least relating to characteristics of the plurality of neighbouring autonomous systems (AS100, AS200, AS300);
   - at least one processing circuit (305) configured to:

   /b/ determine, on the basis of the information received, a result of a reward function, which is representative of a state of said set of links;
   /c/ trigger, depending on the information received and the result of the reward function, at least one action influencing a distribution of the traffic over the set of links (L100, L200, L300) so as to optimize the load state of the set of links (L100, L200, L300);

/d/ repeat steps /a/ to /c/;

the device comprising an artificial intelligence configured to learn to identify, based on successive results of the reward function, the at least one action which makes it possible to distribute the traffic over the set of links (L100, L200, L300) so as to optimize the load state of the set of links (L100, L200, L300), wherein the information received according to step /a/ is representative of:

- a load state of the set of links (L100, L200, L300);
- a type of autonomous system for each of the neighbouring autonomous systems (AS100, AS200, AS300); and
- prefixes relating to networks hosted by the local autonomous system (AS1) and the neighbouring autonomous systems (AS100, AS200, AS300), the prefixes being advertised by an autonomous system to its neighbours.

10. Computer program product comprising instructions which, when these instructions are executed by a processor, cause the latter to implement the steps of the method according to any one of Claims 1 to 8.

[Fig. 1]

FIG. 1

[Fig. 2]

FIG. 2

[Fig. 3]

[Trafic L100]
[Trafic L200]
[Trafic L300]
[Type AS100]
[Type AS200]
[Type AS300]
[Pref. L100]
[Pref. L200]
[Pref. L300]

inL

hidL

[L100 : MOD.MED]
[L100 : MOD.AS PATH]
[L100 : MOD.PREFIX LOAD SHARING]
[L200 : MOD.MED]
[L200 : MOD.AS PATH]
[L200 : MOD.PREFIX LOAD SHARING]
[L300 : MOD.MED]
[L300 : MOD.AS PATH]
[L300 : MOD.PREFIX LOAD SHARING]

outL

FIG. 3

[Fig. 4]

EXTER

306

303

OUTP

305  PROC  ⟷  MEM  304

302  INP

301

FIG. 4

**EP 4 075 758 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20210099378 A1